(19) Europäisches Patentamt

European Patent Office

Office européen des brevets

(11) **EP 1 151 216 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **00902662.6**

(22) Anmeldetag: **07.02.2000**

(51) Int Cl.⁷: **F16H 61/02**

(86) Internationale Anmeldenummer:
**PCT/EP00/00948**

(87) Internationale Veröffentlichungsnummer:
**WO 00/47917 (17.08.2000 Gazette 2000/33)**

(54) **VERFAHREN ZUR STEUERUNG EINES AUTOMATGETRIEBES EINES VON EINER BRENNKRAFTMASCHINE MIT ABGASKATALYSATOR ANGETRIEBENEN KRAFTFAHRZEUGES**

METHOD FOR CONTROLLING AN AUTOMATIC GEARBOX OF A MOTOR VEHICLE W HICH IS DRIVEN BY AN INTERNAL COMBUSTION ENGINE HAVING AN EXHAUST-GAS CATALYTIC CONVERTER

PROCEDE POUR COMMANDER UNE TRANSMISSION AUTOMATIQUE D'UN VEHICULE AUTOMOBILE ENTRAINE PAR UN MOTEUR A COMBUSTION INTERNE EQUIPE D'UN POT CATALYTIQUE

(84) Benannte Vertragsstaaten:
**DE FR GB SE**

(30) Priorität: **11.02.1999 DE 19905576**

(43) Veröffentlichungstag der Anmeldung:
**07.11.2001 Patentblatt 2001/45**

(73) Patentinhaber: **ZF FRIEDRICHSHAFEN Aktiengesellschaft 88038 Friedrichshafen (DE)**

(72) Erfinder: **VOLLMAR, Reinhard D-88213 Ravensburg (DE)**

(56) Entgegenhaltungen:
**WO-A-98/01659       WO-A-99/15815
WO-A-99/18371       DE-A- 3 928 814
US-A- 5 069 084**

**Beschreibung**

Die Erfindung betrifft ein Verfahren zur Steuerung eines Automatgetriebes eines von einer Brennkraftmaschine mit Abgaskatalysator angetriebenen Kraftfahrzeuges, wobei zur schnelleren Erwärmung des Abgaskatalysators ein Warmlauf-Schaltprogramm vorgesehen ist, nach der im Oberbegriff des Patentanspruches 1 näher definierten Art.

Moderne Kraftfahrzeuge weisen zur Minimierung von Schadstoffemissionen einen der Brennkraftmaschine nachgeschalteten Abgaskatalysator auf, welcher seine volle Wirkung im aufgeheizten Zustand entfaltet. Um eine optimale Abgasreinigung zu gewährleisten, muß der Katalysator somit bei einem Kaltstart eines Kraftfahrzeuges möglichst schnell aufgeheizt werden, was bei Automatgetrieben mittels Vorgabe geeigneter Schaltpunkte mit höheren Motordrehzahlen getriebeseitig unterstützt wird.

Hierzu sind aus der Praxis Warmlaufprogramme mit Schaltungen bei höheren Motordrehzahlen bekannt, deren Aktivierungsdauer stets Probleme bereitet. Falls nämlich ein derartiges Warmlaufprogramm zu kurz ist, erreicht der Abgaskatalysator nicht seine erforderliche Betriebstemperatur und die Schadstoffemissionen des Fahrzeuges sind unerwünscht hoch. Wenn das Warmlaufprogramm zu lange andauert, wird unnötig lange in einem Fahrmodus mit hohem Treibstoffverbrauch und eingeschränktem Fahrkomfort gefahren.

Aus der gattungsgemäßen DE 39 28 814 C2 ist eine Steuereinrichtung für ein selbsttätig schaltendes Getriebe eines Kraftfahrzeuges mit einem Abgaskatalysator bekannt, wobei Gangstufen des Getriebes über wenigstens ein verbrauchsoptimiertes und ein leistungsoptimiertes Schaltprogramm manuell durch den Fahrer oder automatisch angewählt werden können. Wenn mittels eines Temperatursensors eine Kaltstartbedingung des Kraftfahrzeuges erfaßt wird, wird für einen festgelegten Zeitraum oder solange die Kaltstartbedingung vorliegt ein Warmlaufprogramm aktiviert, das nur Fahrbedingungen unter höheren Abgasmassen- und Energieströmen als in dem verbrauchsoptimierten Schaltprogramm zuläßt.

Dieses Verfahren dient einem raschen Erreichen der für eine ausreichend hohe Schadstoff-Konversionsrate erforderlichen Temperatur des Abgaskatalysators. Jedoch läßt die Vorgabe einer bestimmten Laufzeit des Warmlaufprogrammes unberücksichtigt, daß sich der Katalysator je nach Fahrweise schneller oder langsamer erwärmt.

Um die Dauer des Warmlaufprogrammes nach den tatsächlichen Bedingungen auszurichten, wird neben dem Ablauf der festgelegten Zeit als Beendigungskriterium für das Warmlaufprogramm das Erreichen einer bestimmten Temperatur des Motors, des Getriebes oder des Ablaufkatalysators vorgesehen. Da die Erwärmung des Motors, des Getriebes und des Katalysators in der Praxis jedoch meist auseinanderfällt, ist dieses Verfahren mit Berücksichtigung der aktuellen Motor- oder Getriebetemperatur mit erheblichen Fehlern behaftet.

Realitätsnahere Werte ließen sich nur durch eine vorgeschlagene Erfassung der aktuellen Temperatur des Katalysators erzielen. Dies bedingt jedoch eine aufwendige, kostspielige und empfindliche Sensorik.

Aus der DE 41 14 033 C2 ist ein weiteres Verfahren zur Steuerung des Gangwechsels in einem Kraftfahrzeug mit elektronisch gesteuertem Automatgetriebe bekannt, bei dem während der Warmlaufphase des Motors abgespeicherte Schaltkennlinien derart modifiziert werden, daß der Gangwechsel bei höherer Fahrzeuggeschwindigkeit bzw. bei höherer Drehzahl der Brennkraftmaschine erfolgt als nach der Warmlaufphase.

Die Dauer des Warmlaufprogrammes hängt bei diesem Verfahren von einem Verhältnis zwischen der mittels eines Temperatursensors gemessenen Motorkühlwasser-Temperatur und einer vorgegebenen Dauerbetriebstemperatur ab, wobei die Warmlaufphase als beendet angenommen wird, wenn die aktuelle Motorkühlwasser-Temperatur die Dauerbetriebstemperatur erreicht hat.

Da auch hier die für die Erwärmung des Abgaskatalysators unzuverlässigen Temperaturwerte des Motorkühlwassers als Abbruchkriterium für das Warmlaufprogramm herangezogen werden, können die realen Bedingungen nicht ausreichend berücksichtigt werden.

In der nicht vorveröffentlichten WO 99/18371 der Anmelderin wird ein Verfahren zur Ansteuerung eines Warmlaufschaltkennfeldes für ein Automatgetriebe beschrieben, bei dem bei Vorliegen einer motorseitigen Warmlaufbedingung das Warmlaufschaltkennfeld solange aktiviert ist, bis ein von der Getriebesteuerung berechneter Energiedurchsatz einen definierten Grenzwert erreicht hat. Die Getriebesteuerung berechnet hierzu aus den ihr vorliegenden aktuellen Eingangsgrößen Motormoment und Motordrehzahl eine theoretische Motorabgabeleistung und summiert diese zu dem Energiedurchsatz auf.

Die Qualität dieses Verfahrens ist im wesentlichen abhängig von der Genauigkeit des Motormomentensignals, das die Getriebesteuerung bei der Energiedurchsatzberechnung verarbeitet. Üblicherweise ist das Motormomentensignal eine Berechnungsgröße der Motorsteuerung und basiert auf einem mehr oder weniger exakten Verbrennungsmodell des Motors. Bekannt ist auch, daß die exakte Berechnung des tatsächlich abgegebenen Motormomentes insbesondere bei Kaltstart und insbesondere im Teillastbereich des Motors sehr schwierig und aufgrund von Modellannahmen fehlerbehaftet ist.

Der vorliegenden Erfindung liegt die Aufgabe zugrunde, ein Verfahren zur Steuerung eines Automatgetriebes eines von einer Brennkraftmaschine mit Abgaskatalysator angetriebenen Kraftfahrzeuges bereit zu stellen, mit dem ein Warmlauf-Schaltprogramm zur schnelleren Erwärmung des Abgaskatalysators mit höheren Schaltpunkten für Gangschaltungen nur solange aktiviert bleibt, bis der Abgaskatalysator seine optimale Betriebstemperatur erreicht hat, so daß wieder möglichst früh zu geräusch- und verbrauchsarmen Schaltpunkten zurückgekehrt werden kann.

Erfindungsgemäß wird diese Aufgabe mit einem Verfahren gemäß den kennzeichnenden Merkmalen des Patentanspruches 1 gelöst.

Das erfindungsgemäße Verfahren geht von der Erkenntnis aus, daß der Abgaskatalysator in Abhängigkeit der durch ihn geströmten Abgasmenge erwärmt wird, wobei die Abgasmenge eine Funktion der Motordrehzahl und des Motormoments ist.

Die Abgasmengen lassen sich empirisch für alle möglichen Betriebszustände mit großer Zuverlässigkeit einfach ermitteln und in einem Rechner der Elektronischen Getriebesteuereinrichtung ablegen. Da der gemessene Temperaturwert der Motortemperatur bei Start der Brennkraftmaschine am besten mit der Temperatur des Abgaskatalysators übereinstimmt, bedient sich das erfindungsgemäße Verfahren in vorteilhafter Weise zuverlässiger Daten, welche den tatsächlichen Bedingungen in hohem Maße entsprechen.

Damit ermöglicht das Verfahren, daß der Abgaskatalysator schneller auf seine normale Betriebstemperatur erwärmt wird, womit rasch eine gewünschte Minderung der Schadstoffemissionen gegeben ist. Zusätzlich wird aber die Dauer des Warmlauf-Schaltprogrammes so bestimmt, daß die drehzahlerhöhende Wirkung des Warmlauf-Schaltprogrammes möglichst kurz gehalten wird, wodurch früh in ein Schaltprogramm mit niedrigeren Schaltpunkten umgeschaltet werden kann, das einen erwünschten Fahrmodus mit niedrigem Kraftstoffverbrauch und hohem Komfort durch niedrige Geräusche ermöglicht.

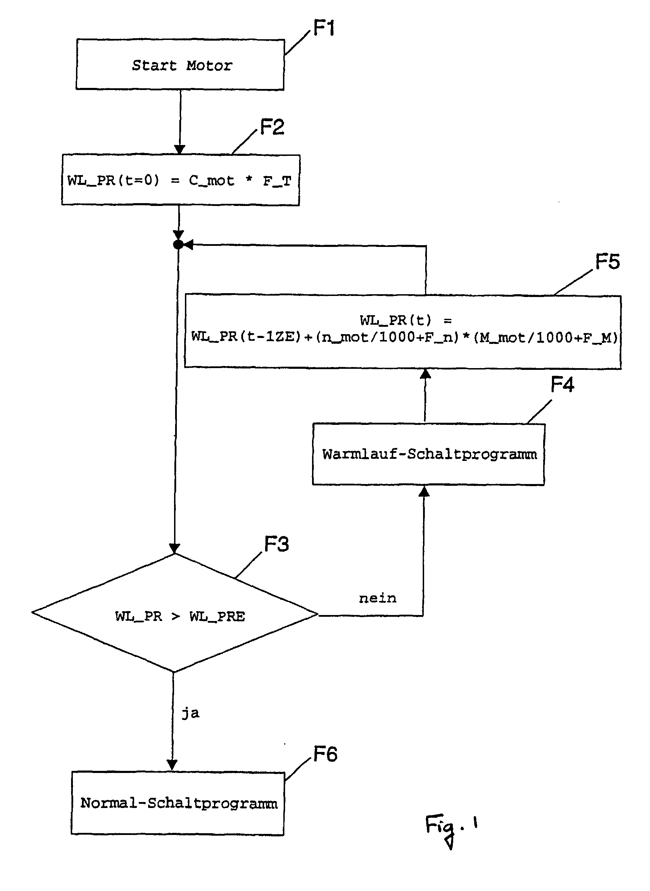

Weitere Vorteile und Weiterbildungen der Erfindung ergeben sich aus den Unteransprüchen und aus dem nachfolgend anhand der Zeichnung prinzipmäßig beschriebenen Ausführungsbeispiel.

Die einzige Figur zeigt ein vereinfachtes Flußdiagramm eines erfindungsgemäßen Verfahrens.

Das anhand der Figur beschriebene Verfahren zur Steuerung eines nicht näher dargestellten Automatgetriebes für ein von einer Brennkraftmaschine mit Abgaskatalysator angetriebenes Kraftfahrzeug wird mit einer Elektronischen Getriebesteuereinrichtung (EGS) durchgeführt, welche stetig Signale über einen CAN-(Controller Area Network)-Datenbus mit einer Digitalen Motorelektronik (DME) der Brennkraftmaschine austauscht.

In einem Mikroprozessor der Elektronischen Getriebesteuereinrichtung ist zur schnelleren Erwärmung des Abgaskatalysators nach einem in einer ersten Funktion F1 erkannten Start der Brennkraftmaschine bzw. des Motors ein Warmlauf-Schaltprogramm F4 mit Schaltkennlinien für einen Gangwechsel bei höheren Motordrehzahlen n_mot als bei Betriebstemperatur des Abgaskatalysators abgelegt.

Bevor das Warmlauf-Schaltprogramm F4 gestartet wird, wird zunächst in einer Funktion F2 ein von einer Motortemperatur C_mot abhängiger Zählerwert WL_PR ermittelt, der in einer nachfolgenden Prüffunktion F3 mit einer vorgegebenen Schwelle WL_PRE verglichen wird.

Der von der Motortemperatur C_mot abhängige Zählerwert WL_PR stellt zudem eine Größe dar, welche einer den Abgaskatalysator durchströmenden Abgasmenge äquivalent ist.

Bei Start der Brennkraftmaschine wird in der Funktion F2 ein Startwert des Zählerwertes WL_PR aus einer in der elektronischen Getriebesteuereinrichtung abgelegten, nicht näher dargestellten Kennlinie gewählt, wobei die anfänglichen Zählerwerte WL_PR der Kennlinie mittels der Motortemperatur C_mot, die mit einem Temperatursensor aus einer Motorkühlwasser-Temperatur und einer Außentemperatur ermittelt wird, und eines empirisch ermittelten Motorfaktor F_T gemäß der Beziehung

$$WL\_PR(t=0) = C\_mot*F\_T$$

bestimmt werden.

In der nachfolgenden Funktion F3 wird geprüft, ob dieser Startwert WL_PR größer oder gleich dem Schwellwert WL_PRE ist, der einen applizierbaren Wert darstellt, welcher der Abgasmenge entspricht, die den Abgaskatalysator bis zum Erreichen von dessen Betriebstemperatur durchströmt haben muß.

Wenn der in einer RAM-Zelle der Elektronischen Getriebesteuereinrichtung abgelegte Startwert WL_PR(t=0) oder ein späterer Zählerwert WL_PR kleiner ist als der Warmlauf-Programm-Endwert WL_PRE ist, wird das Warmlauf-Schaltprogramm in der Funktion F4 aktiviert, andernfalls wird in einer Funktion F6 zu einem Normal-Schaltprogramm verzweigt.

Alternativ zu dieser Lösung, bei der der Startwert W_PR(t=0) variabel und der Endwert WL_PRE fest ist, kann auch vorgesehen sein, daß bei Start der Brennkraftmaschine die Größe WL_PR(t=0) mit Null belegt wird und der ein Abbruchkriterium darstellende Grenzwert WL_PRE in Abhängigkeit von der anfänglichen Motortemperatur C_mot bestimmt wird.

Das Warmlauf-Schaltprogramm F4 bleibt in jedem Fall solange aktiv, bis der Zählerwert WL_PR den für die Betriebstemperatur des Abgaskatalysators vordefinierten Grenzwert WL_PRE erreicht.

Dazu wird der Zählerwert WL_PR in einer Funktion F5 in Zeiteinheiten ZE von einer Sekunde aktualisiert, wobei nur eine geringe Rechnerkapazität erforderlich ist.

Der aktuelle Zählerwert WL_PR(t) wird aus der Motordrehzahl n_mot und einem Motormoment M_mot gemäß folgender Beziehung ermittelt:

$$WL\_PR(t) = WL\_PR(t-1ZE)+(n\_mot/1000+F\_n)*(M\_mot/1000+F\_M)$$

Darin ist WL_PR(t) der die Abgasmenge wiedergebende, aktuelle Zählerwert, WL_PR(t-1ZE) der alte, eine Zeiteinheit ZE zuvor errechnete Zählerwert, n_mot die Motordrehzahl, F_n ein Korrekturwert der Motordrehzahl, M_mot das Motormoment und F_M ein Korrekturwert des Motormomentes.

Der Korrekturwert der Motordrehzahl F_n und der Korrekturwert des Motormomentes F_M sind empirische, in einem nichtflüchtigen Speicher der Elektronischen Getriebesteuereinrichtung abgelegte Werte. Diese ergeben sich aus der Erwärmung des Abgaskatalysators bei bestimmten Motordrehzahlen n_mot und Motormomenten M_mot unter unterschiedlichen Betriebsbedingungen.

Bei ausreichender Erprobung der Erwärmung des Abgaskatalysators in Abhängigkeit von der Abgasmenge läßt sich das vorgestellte Verfahren somit für alle möglichen Betriebssituationen optimieren.

Bezugszeichen

| | |
|---|---|
| C_mot | Motortemperatur |
| F_M | Korrekturwert des Motormomentes |
| F_n | Korrekturwert der Motordrehzahl |
| F_T | temperaturbezogener Motorfaktor |
| M_mot | Motormoment |
| n_mot | Motordrehzahl |
| t | Zeit |
| WL_PR | Zählerwert |
| WL_PRE | Zählerwert, Endwert |
| ZE | Zeiteinheit |

**Patentansprüche**

1. Verfahren zur Steuerung eines Automatgetriebes eines von einer Brennkraftmaschine mit Abgaskatalysator angetriebenen Kraftfahrzeuges, wobei in einer Elektronischen Getriebesteuereinrichtung zur schnelleren Erwärmung des Abgaskatalysators ein Warmlauf-Schaltprogramm (F4) mit Schaltkennlinien für einen Gangwechsel bei höheren Motordrehzahlen als bei Betriebstemperatur des Abgaskatalysators abgelegt ist, welches aktiviert wird, wenn mittels eines Temperatursensors eine Warmlaufphase der Brennkraftmaschine erkannt wird, und welches solange aktiviert bleibt, bis eine aus Motorsignalen gebildete Kenngröße (WL_PR) einen für die Betriebstemperatur des Abgaskatalysators vordefinierten Grenzwert (WL_PRE) erreicht, **dadurch gekennzeichnet, daß** die Kenngröße (WL_PR) einer den Abgaskatalysator durchströmenden Abgasmenge äquivalent ist und aus einer Motordrehzahl (n_mot) und einem Motormoment (M_mot) unter Berücksichtigung eines empirisch ermittelten Korrekturwertes (F_n) für die Motordrehzahl (n_mot) und eines empirisch ermittelten Korrekturwertes (F_M) für das Motormoment (M_mot) ermittelt wird.

2. Verfahren nach Anspruch 1, **dadurch gekennzeichnet, daß** der empirisch ermittelte Korrekturwert der Motordrehzahl (F_n) und der empirisch ermittelte Korrekturwert des Motormomentes (F_M) für definierte Motordrehzahlen (n_mot) und Motormomente (M_mot) in einem nichtflüchtigen Speicher der Elektronischen Getriebesteuereinrichtung abgelegt sind.

3. Verfahren nach Anspruch 1 oder 2, **dadurch gekennzeichnet, daß** die Größe (WL_PR), welche der den Abgaskatalysator durchströmenden Abgasmenge äquivalent ist, gemäß der Beziehung

$$WL\_PR(t) = WL\_PR(t-1ZE)+(n\_mot/1000+F\_n)*(M\_mot/1000+F\_M)$$

bestimmt wird, mit einem die Abgasmenge wiedergebenden, auf eine Zeit (t) bezogenen Zählerwert (WL_PR), einer Zeiteinheit (ZE), der Motordrehzahl (n_mot), dem Korrekturwert der Motordrehzahl (F_n), dem Motormoment (M_mot) und dem Korrekturwert des Motormomentes (F_M).

4. Verfahren nach einem der Ansprüche 1 bis 3, **dadurch gekennzeichnet, daß** die Warmlaufphase der Brennkraftmaschine mittels einer bei Start der Brennkraftmaschine gemessenen Motortemperatur (C_mot) erkannt wird.

5. Verfahren nach einem der Ansprüche 1 bis 4, **dadurch gekennzeichnet, daß** bei Start der Brennkraftmaschine als Startwert der Größe (WL_PR), welche der den Abgaskatalysator durchströmenden Abgasmenge äquivalent ist, ein in einer Kennlinie abgelegter, von der Motortemperatur (C_mot) und einem empirisch ermittelten Motorfaktor (F_T) abhängiger Zählerwert gemäß der Beziehung

$$WL\_PR(t=0) = C\_mot*F\_T$$

verwendet wird.

6. Verfahren nach einem der Ansprüche 1 bis 4, **dadurch gekennzeichnet, daß** bei Start der Brennkraftmaschine die Größe (WL_PR), welche der den Abgaskatalysator durchströmenden Abgasmenge äquivalent ist, mit Null belegt wird und der ein Abbruchkriterium darstellende Grenzwert (WL_PRE) in Abhängigkeit von der Motortemperatur (C_mot) gewählt wird.

7. Verfahren nach einem der Ansprüche 3 bis 6, **dadurch gekennzeichnet, daß** die Größe (WL_PR), welche der den Abgaskatalysator durchströmenden Abgasmenge äquivalent ist, in Zeiteinheiten (ZE) von einer Sekunde aktualisiert wird.

**Claims**

1. Method for controlling an automatic gearbox of a motor vehicle which is driven by an internal combustion engine having an exhaust gas catalytic converter, wherein a warm-up shift program (F4) with shift characteristics for a gear change at higher engine speeds than at the operating temperature of the exhaust gas catalytic converter is stored in an electronic gearbox control device for faster warm-up of the exhaust gas catalytic converter, which program is activated when a warm-up phase of the internal combustion engine is detected by means of a temperature sensor and which remains activated until a characteristic quantity (WL_PR) formed from engine signals reaches a limit value (WL_PRE) which is predefined for the operating temperature of the exhaust gas catalytic converter, **characterised in that** the characteristic quantity (WL_PR) is equivalent to an exhaust gas amount flowing through the exhaust gas catalytic converter and is determined from an engine speed (n_mot) and an engine torque (M_mot), taking account of an empirically determined correction value (F_n) for the engine speed (n_mot) and an empirically determined correction value (F_M) for the engine torque (M_mot).

2. Method according to Claim 1, **characterised in that** the empirically determined correction value of the engine speed (F_n) and the empirically determined correction value of the engine torque (F_M) for defined engine speeds (n_mot) and engine torques (M_mot) are stored in a non-volatile memory of the electronic gearbox control device.

3. Method according to Claim 1 or 2, **characterised in that** the quantity (WL_PR), which is equivalent to the exhaust gas amount flowing through the exhaust gas catalytic converter, is determined according to the relation

$$WL\_PR(t) = WL\_PR(t-1ZE)+(n\_mot/1000+F\_n)*(M\_mot/1000+F\_M),$$

with a counter value (WL_PR), which reproduces the exhaust gas amount and is related to a time (t), a unit of time (ZE), the engine speed (n_mot), the correction value of the engine speed (F_n), the engine torque (M_mot) and the correction value of the engine torque (F_M).

4. Method according to any one of Claims 1 to 3, **characterised in that** the warm-up phase of the internal combustion engine is detected by means of an engine temperature (C_mot) which is measured upon starting the internal combustion engine.

5. Method according to any one of Claims 1 to 4, **characterised in that** a counter value which is stored in a characteristic and is dependent on the engine temperature (C_mot) and an empirically determined engine factor (F_T) according to the relation

$$WL\_PR(t=0) = C\_mot*F\_T$$

is used upon starting the internal combustion engine as the starting value of the quantity (WL_PR), which is equivalent to the exhaust gas amount flowing through the exhaust gas catalytic converter.

6. Method according to any one of Claims 1 to 4, **characterised in that** the quantity (WL_PR), which is equivalent to the exhaust gas amount flowing through the exhaust gas catalytic converter, is filled with zeros, and the limit value (WL_PRE) representing an abort criterion is selected in accordance with the engine temperature (C_mot) upon starting the internal combustion engine.

7. Method according to any one of Claims 3 to 6, **characterised in that** the quantity (WL_PR), which is equivalent to the exhaust gas amount flowing through the exhaust gas catalytic converter, is updated in units of time (ZE) of one second.

**Revendications**

1. Procédé pour la commande d'une boîte de vitesses automatique d'un véhicule automobile propulsé par un moteur à combustion interne équipé d'un catalyseur de gaz d'échappement, dans lequel, dans un dispositif de commande électronique de boîte de vitesses, pour l'échauffement plus rapide du catalyseur de gaz d'échappement, est enregistré un programme de changement en marche à chaud (F4) comprenant les caractéristiques de changement pour déterminer un changement de vitesse à de plus hautes vitesses de rotation du moteur qu'à la température de service du catalyseur de gaz d'échappement, qui est activé lorsque, au moyen d'un capteur de température, on détecte une phase de marche à chaud du moteur à combustion interne, et qui reste activé jusqu'au moment où une grandeur caractéristique (WL_PR) formée à partir des signaux du moteur, atteint une valeur limite (WL_PRE) prédéfinie pour la température de fonctionnement du catalyseur de gaz d'échappement, **caractérisé en ce que** la grandeur caractéristique (WL_PR) est équivalente à une quantité de gaz d'échappement qui traverse le catalyseur de gaz d'échappement, et est obtenue à partir d'une vitesse de rotation du moteur (n_mot) et d'un couple moteur (M_mot), en tenant compte d'une valeur de correction (F_n) obtenue empiriquement pour la vitesse de rotation du moteur (n_mot) et d'une valeur de correction (F_M) obtenue empiriquement pour le couple moteur (M_mot).

2. Procédé selon la revendication 1, **caractérisé en ce que** la valeur de correction de la vitesse de rotation (F_n) du moteur, obtenue empiriquement, et la valeur de correction du couple moteur (F_M), obtenue empiriquement, pour des vitesses de rotation du moteur (n_mot) définies et des couples moteur (M_mot) définis sont enregistrées dans une mémoire non volatile du dispositif de commande électronique de la boîte de vitesses.

3. Procédé selon la revendication 1 ou 2, **caractérisé en ce que** la grandeur (WL_PR) qui est équivalente à la quantité de gaz qui traverse le catalyseur de gaz d'échappement est déterminée d'après la relation

$$WL\_PR (t) = WL\_PR (t\text{ -}1\text{ ZE}) + (n\_mot/1000 + F\_n) * (M\_mot/1000 + F\_M)$$

avec une valeur de compteur (WL_PR) qui reproduit la quantité de gaz d'échappement, rapportée à un instant (t), une unité de temps (ZE), la vitesse de rotation du moteur (n_mot), la valeur de correction de la vitesse de rotation du moteur (F_n), le couple moteur (M_mot) et la valeur de correction du couple moteur (F_M).

4. Procédé selon l'une des revendications 1 à 3, **caractérisé en ce que** la phase de marche à chaud du moteur à combustion interne est détectée au moyen d'une température du moteur (C_mot) mesurée lors du démarrage du moteur à combustion interne.

5. Procédé selon l'une des revendications 1 à 4, **caractérisé en ce que**, lors du démarrage du moteur à combustion interne, on utilise comme valeur de départ de la grandeur (WL_PR), qui est équivalente à la quantité de gaz d'échappement qui traverse le catalyseur de gaz d'échappement, une valeur de compteur enregistrée dans une caractéristique qui dépend de la température du moteur (C_mot) et d'un facteur de moteur (F_T), obtenu empiriquement, en application de la relation

$$WL\_PR (t=0) = C\_mot*F\_T$$

6. Procédé selon l'une des revendications 1 à 4, **caractérisé en ce que**, lors du démarrage du moteur à combustion interne, la grandeur (WL_PR), qui est équivalente à la quantité de gaz d'échappement qui traverse le catalyseur de gaz d'échappement, est enregistrée à la valeur zéro et la valeur limite (WL_PRE), qui représente un critère d'interruption, est choisie en fonction de la température du moteur (C_mot).

7. Procédé selon l'une des revendications 3 à 6, **caractérisé en ce que** la grandeur (WL_PR), qui est équivalente à la quantité de gaz d'échappement qui traverse le catalyseur de gaz d'échappement, est actualisée à des unités de temps (ZE) d'une seconde.

| F1 |
| --- |
| Start Motor |

$$WL\_PR(t=0) = C\_mot * F\_T \qquad \text{F2}$$

$$\text{F5}$$
$$WL\_PR(t) =$$
$$WL\_PR(t-1ZE)+(n\_mot/1000+F\_n)*(M\_mot/1000+F\_M)$$

Warmlauf-Schaltprogramm    F4

F3

WL_PR > WL_PRE

nein

ja

Normal-Schaltprogramm    F6

Fig. 1